Europäisches Patentamt

European Patent Office

Office européen des brevets

(19)

(11) Numéro de publication: **0 250 289**
**B1**

(12) **FASCICULE DE BREVET EUROPEEN**

(45) Date de publication du fascicule du brevet:
**07.02.90**

(21) Numéro de dépôt: **87401258.6**

(22) Date de dépôt: **04.06.87**

(51) Int. Cl.⁴: **B25J 15/04**, B25J 19/06,
F16P 5/00

(54) Appareil de sécurité pour bras ou main de manipulateur.

(30) Priorité: **19.06.86 FR 8609052**

(43) Date de publication de la demande:
**23.12.87 Bulletin 87/52**

(45) Mention de la délivrance du brevet:
**07.02.90 Bulletin 90/6**

(84) Etats contractants désignés:
**DE ES GB IT**

(56) Documents cités:
**DE-A- 3 407 624**
**FR-A- 1 181 485**
**FR-A- 2 554 043**
**US-A- 4 500 065**

(73) Titulaire: **AUTOMOBILES PEUGEOT, 75, avenue de la
Grande Armée, F-75116 Paris(FR)**
Titulaire: **AUTOMOBILES CITROEN, 62 Boulevard
Victor-Hugo, F-92200 Neuilly-sur-Seine(FR)**

(72) Inventeur: **Biannic, René, 14, rue du Coteau Orgeres,
F-35230 Saint Erblon(FR)**

(74) Mandataire: **Boivin, Claude, 9, rue Edouard-Charton,
F-78000 Versailles(FR)**

## Description

Pour l'alimentation des presses d'emboutissage ou de soudage, on fait de plus en plus appel à des machines automatiques programmables ou non (robots ou manipulateurs).

Pour effectuer cette mission et pour leur permettre de s'adapter aux différentes pièces à manutentionner, ces machines sont équipées de bras ou de mains de préhension interchangeables fixés au poignet ou au chariot de la machine par l'intermédiaire d'une fixation rapide ou de vis. Cette liaison, en général très rigide, entre la machine et l'organe de préhension ne permet pas à celui-ci de s'effacer en cas de fausse manoeuvre ou de mauvais réglage (avance du bras de chargement alors que la presse est fermée par exemple). Cet inconvénient est destructeur, non seulement pour l'organe de préhension mais aussi pour la machine elle-même qui subit un choc considérable.

La présente invention a pour objet un appareil de sécurité pour organe de préhension de manipulateur, qui est destiné à être placé entre la machine et l'organe de préhension et qui assure, en cas d'un effort anormal sur l'organe de préhension, le désaccouplement de cet organe, ce qui évite une détérioration du robot ou du manipulateur de chargement. Un tel dispositif est decrit dans le brevet US-A 4 500 065.

Cet appareil est caractérisé en ce qu'il comprend un support propre à être fixé sur la machine, deux crochets montés pivotants sur ce support et aptes à saisir l'organe de préhension, un verrou éclipsable pour empêcher le pivotement des crochets dans le sens correspondant à la libération de l'organe de préhension, et des moyens élastiques tarables pour empêcher le verrou de s'éclipser.

En temps normal, les crochets assurent la fixation de l'organe de préhension au support, donc à la machine et sont maintenus en position par le verrou. En cas d'effort anormal, le verrou s'éclipse, ce qui permet aux crochets de pivoter et de libérer l'organe de manutention.

De préférence, le verrou est soumis à l'action d'un ressort précontraint et comporte une collerette maintenue en appui par ce ressort sur des becs des crochets.

Le verrou peut être mobile sur une tige filetée dont une extrémité comporte un épaulement reposant sur une pièce solidaire du support, le ressort étant interposé entre le verrou et un écrou vissé sur l'autre extrémité de la tige.

L'appareil peut comporter des moyens de réarmement indépendants des moyens de tarage des moyens élastiques.

Ces moyens de réarmement peuvent comprendre une pièce qui est disposée au-dessus du verrou, dans laquelle est vissée l'extrémité de la tige comportant l'épaulement, et des moyens pour empêcher cette pièce de tourner.

On a décrit ci-après, à titre d'exemple non limitatif, un mode de réalisation de l'appareil de sécurité selon l'invention, avec référence au dessin annexé dans lequel :

La Figure 1 est une vue en élévation de cet appareil;

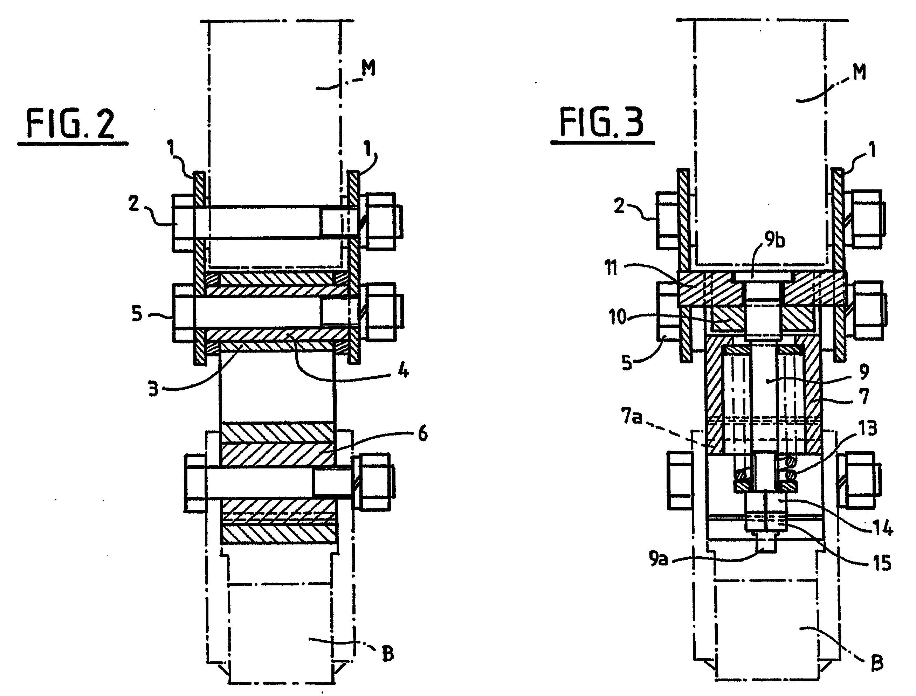

La Figure 2 en est une vue en coupe suivant II-II de la Figure 1;
La Figure 3 en est une coupe suivant III-III de la Figure 1.

Tel qu'il est représenté au dessin, l'appareil de sécurité selon l'invention comporte un support propre à être fixé sur une machine d'alimentation M et qui est ici constitué par deux plaques latérales 1 fixées à la machine par des boulons 2.

Deux crochets 3 et 3a sont montés pivotants entre les deux plaques 1, sur deux bagues de frottement 4 montées sur des axes 5. Ces crochets peuvent s'engager sur deux cylindres 6 et 6a d'un organe de préhension constitué par exemple par un bras B.

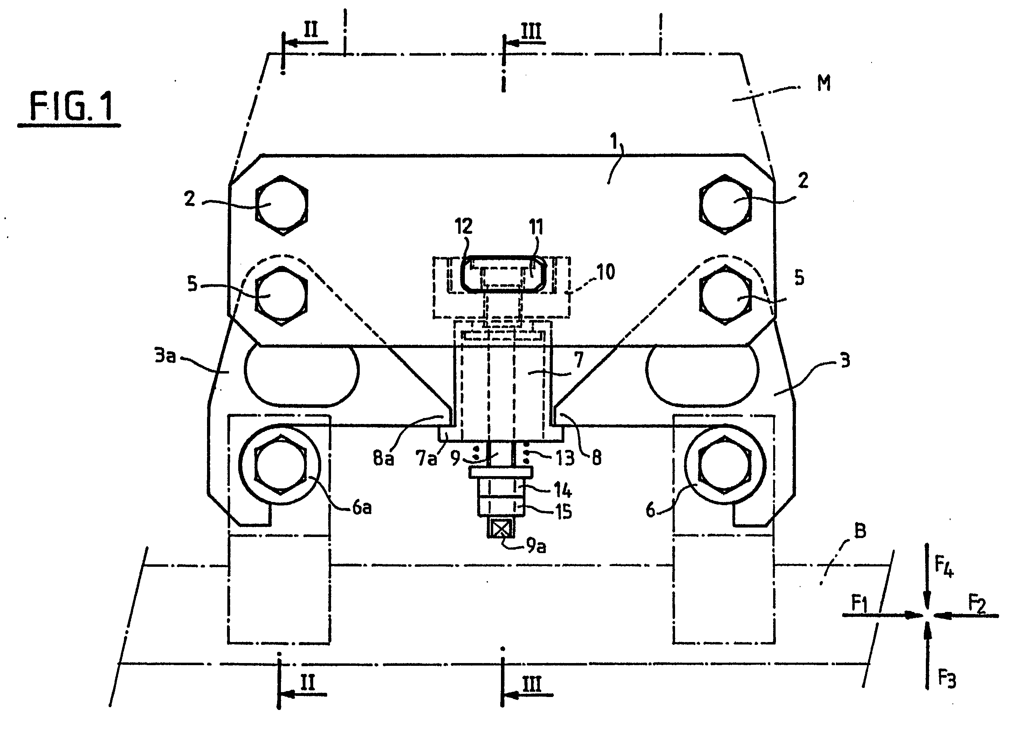

Un verrou 7 qui présente une collerette 7a coopérant avec des becs 8 et 8a des crochets 3 et 3a, permet de maintenir ces crochets dans leur position d'engagement représentée à la Figure 1. Ce verrou est monté coulissant sur une tige de guidage 9 dont les deux extrémités sont filetées et dont une extrémité 9a se termine par un carré ou un six pans alors que son autre extrémité est terminée par une collerette 9b et vissée dans une pièce d'armement 10, de section en U, encastrée sur une traverse 11; celle-ci est immobilisée par engagement de ses extrémités dans des ouvertures 12 des plaques 1. La pièce 10 est ainsi arrêtée en rotation. La tige 9 peut tourner librement dans la traverse 11 et son épaulement 9b repose dans un évidement de cette traverse.

Un ressort 13 interposé entre le verrou 7 et un écrou 14 vissé sur l'extrémité 9a de la tige 9 tend à maintenir le verrou 7 dans sa position active. Ce verrou est précontraint à une valeur définie à l'avance, par l'intermédiaire de l'écrou 14 qui est bloqué par un contre-écrou 15.

Lorsque l'ensemble est monté sur la machine, le ressort précontraint 13 maintient le verrou 7 dans sa position de la Figure 1, dans laquelle les crochets 3 et 3a sont engagés sur les cylindres 6 et 6a du bras B qui est ainsi fixé à la machine M.

Si un effort s'exerce suivant la flèche F! sur le bras B, le crochet 3 pivote autour de son axe 5 et son bec 8 déplace le verrou 7 en comprimant le ressort 13. Si cet effort est anormalement élevé, le bec 8 échappe au verrou; le crochet 3 est libéré et pivote en libérant à son tour le cylindre 6, donc le bras de préhension B qui se détache de la machine M. Si l'effort anormal s'exerce suivant la flèche F@, c'est le crochet 3a qui pivote et libère le bras B.

Si l'effort anormal s'exerce dans la direction de la flèche F# ou F$, le crochet 3 ou 3a s'efface. Ainsi quelle que soit la direction de l'effort anormal, l'un des deux verrous s'efface, ou les deux, ce qui libère le bras B et protège la machine M.

Pour remettre en place le bras B, après fonctionnement de l'appareil de sécurité, on fait pivoter la tige 9 à l'aide d'une clef engagée sur son extrémité 9a. Cette tige se visse dans la tige d'armement 10 en comprimant le ressort 13.

Lorsque le ressort 13 est comprimé, il suffit de remettre en place le bras B, puis de basculer les crochets 3 et 3a pour les engager sur les cylindres 6 et 6a, et enfin de libérer le ressort 13 en faisant pivoter la tige 9 en sens contraire à l'aide de la clef. Lorsque cette opération est effectuée, le bras B est à nouveau relié à la machine M et le tarage de l'appareil de sécurité est identique au tarage initial.

Il va de soi que la présente invention ne doit pas être considérée comme limitée au mode de réalisation décrit et représenté, mais en couvre, au contraire, toutes les variantes.

## Revendications

1. Appareil de sécurité pour organe de préhension de manipulateur, destiné à être interposé entre la machine et l'organe de préhension et comprenant un support (1) propre à être fixé sur la machine M, caractérisé en ce qu'il comprend en outre deux crochets (3 et 3a) montés pivotants sur ce support (1) et aptes à saisir l'organe de préhension B, un verrou éclipsable (7) pour empêcher le pivotement des crochets dans le sens correspondant à la libération de l'organe de préhension, et des moyens élastiques tatables (13) pour empêcher le verrou de s'éclipser.

2. Appareil de sécurité selon la revendication 1, caractérisé en ce que le verrou (7) est soumis à l'action d'un ressort précontraint (13) et comporte une collerette (7a) maintenue en appui par ce ressort sur des becs (8-8a) des crochets (3-3a).

3. Appareil de sécurité selon la revendication 2, caractérisé en ce que le verrou (7) est mobile sur une tige filetée (9) dont une extrémité comporte un épaulement (9b) reposant sur une pièce (11) solidaire du support (1), le ressort (13) étant interposé entre le verrou (7) et un écrou (14) vissé sur l'autre extrémité de la tige (9).

4. Appareil selon l'une des revendications précédentes, caractérisé en ce qu'il comporte des moyens de réarmement indépendants des moyens de tarage des moyens élastiques (13).

5. Appareil de sécurité selon les revendications 3 et 4, caractérisé en ce que les moyens d'armement comprennent une pièce (10) qui est disposée au-dessus du verrou (7), dans laquelle est vissée l'extrémité de la tige (9) comportant l'épaulement (9b), et des moyens (11) pour empêcher cette pièce (10) de tourner.

## Patentansprüche

1. Sicherheitseinrichtung für ein Manipulatorgreiforgan, die zwischen die Maschine und das Greiforgan einschaltbar ist und eine an der Maschine M befestigbare Halterung (1) besitzt, gekennzeichnet durch zwei Haken (3 und 3a), die schwenkbar an dieser Halterung (1) montiert und zum Festhalten des Greiforgans B geeignet sind, einen wegbewegbaren Riegel (7) zur Verhinderung der Schwenkung des Hakens in dem der Freigabe des Greiforgans entsprechenden Drehsinn und abgleichbare elastische Mittel (13) zur Verhinderung der Wegbewegung des Riegels.

2. Sicherheitseinrichtung nach Anspruch 1, dadurch gekennzeichnet, daß der Riegel (7) der Einwirkung einer vorgespannten Feder (13) ausgesetzt ist und einen Kragen (7a) aufweist, der durch diese Feder sich an Backen (8–8a) der Haken (3–3a) abstützend festgehalten wird.

3. Sicherheitseinrichtung nach Anspruch 2, dadurch gekennzeichnet, daß der Riegel (7) bewegbar auf einer Gewindestange (9) angeordnet ist, deren eines Ende eine Schulter (9b) aufweist, die auf einem mit der Halterung (1) fest verbundenen Bauteil (11) ruht und die Feder (13) zwischen den Riegel (7) und eine auf das andere Ende der Gewindestange (9) aufgeschraubte Schraubenmutter (14) eingeschaltet ist.

4. Sicherheitseinrichtung nach einem der vorhergehenden Ansprüche, dadurch gekennzeichnet, daß sie von den Mitteln zum Abgleich der elastischen Mittel (13) unabhängige Rückstellmittel aufweist.

5. Sicherheitseinrichtung nach den Ansprüchen 3 und 4, dadurch gekennzeichnet, daß diese Rückstellmittel ein Bauteil (10) aufweisen, das oberhalb des Riegels (7) angeordnet ist, in welches das die Schulter (9b) aufweisende Ende der Gewindestange (9) eingeschraubt ist sowie Mittel (11) zur Verhinderung einer Drehung dieses Bauteils (10).

## Claims

1. Safety apparatus for a manipulator gripping member, intended to be interposed between a machine and the gripping member and comprising a support (1) adapted to be fixed to the machine M, characterized in that it comprises two hooks (3 and 3a) mounted for pivoting on this support (1) and adapted to seize the gripping member B, a retractable bolt (7) for preventing pivoting of the hooks in the direction corresponding to release of the gripping member and adjustable resilient means (13 ) for preventing the bolt from retracting.

2. Safety apparatus according to claim 1, characterized in that in that the bolt (7) is subjected to the action of a prestressed spring (13) and comprises a collar (7a) held in abutment by this spring on nose ends (8, 8a) of the hooks (3, 3a).

3. Safety apparatus according to claim 2, characterized in that the bolt (7) is movable on a threaded rod (9) one end of which comprises a shoulder (9b) resting on a piece (11) fast with the support (1), the spring (13) being interposed between the bolt (7) and a nut (14) screwed on the other end of the rod (9).

4. Safety apparatus according to one of the preceding claims, characterized in that it comprises resetting means independent of the means for adjusting the resilient means.

5. Safety apparatus according to claims 3 and 4, characterized in that the setting means comprise a piece (10) which is disposed above the bolt (7), in which the end of the rod (9) comprising the shoulder (9b) is screwed and means (11) for preventing this piece (10) from rotating.

EP 0 250 289 B1

FIG.1

FIG.2

FIG.3

EP 0 250 289 B1